# EUROPÄISCHE PATENTSCHRIFT

(11) **EP 3 652 252 B1**
(45) Veröffentlichungstag und Bekanntmachung des Hinweises auf die Patenterteilung: **09.06.2021**
(21) Anmeldenummer: 18735340.4
(22) Anmeldetag: 09.07.2018
(51) Int. Cl.: C08L 71/00, C08K 3/00

(54) **BESCHICHTUNGSSYSTEM MIT HOHER OBERFLÄCHENRAUHIGKEIT**
COATING SYSTEM WITH HIGH SURFACE ROUGHNESS
SYSTÈME DE REVÊTEMENT PRÉSENTANT UNE RUGOSITÉ DE SURFACE ÉLEVÉE

(30) Priorität: 13.07.2017 EP 17181247
(43) Veröffentlichungstag der Anmeldung: 20.05.2020
(73) Patentinhaber: Sika Technology AG, 6340 Baar (CH)
(72) Erfinder: STÖHR, Benjamin, 70437 Stuttgart (DE); NIETHAMMER, Matthias, 73079 Süssen (DE); PUSEL, Thomas, 71282 Hemmingen (DE); GRÖTZINGER, Jochen, 73525 Schwäbisch Gmünd (DE); KÜHNER, Stefan, 70439 Stuttgart (DE)
(74) Vertreter: Sika Patent Attorneys
(86) Internationale Anmeldenummer: PCT/EP2018/068533
(87) Internationale Veröffentlichungsnummer: WO 2019/011853

(56) Entgegenhaltungen:
- EP-A1- 2 755 451
- WO-A1-01/96433
- WO-A1-2016/151007

## Beschreibung

### Technisches Gebiet

Die Erfindung betrifft Bodenbeschichtungssysteme mit einer ausreichenden Oberflächenrauhigkeit, insbesondere für die Herstellung von Industrieböden oder Parkhausböden.

### Stand der Technik

Für Bodenbelagsysteme, vor allem für befahrbare Böden wie Industrieböden, Brücken und Böden in Parkhäusern, gibt es ein teilweise vielfältiges Anforderungsprofil, insbesondere in Bezug auf Flexibilität bei hoher Abrieb- und Chemikalienbeständigkeit.

Bei gewissen Anwendungen wird darüber hinaus eine ausreichende Oberflächenrauhigkeit vorausgesetzt. Um eine solche zu gewährleisten wird typischerweise das applizierte Beschichtungssystem vor dessen Aushärtung mit Quarzsand oder anderen Aggregaten abgestreut. Nach der Aushärtung wird der überschüssige/nicht eingebundene Quarzsand typischerweise mit einem Besen entfernt. Um eine sichere und langfristige Verbindung der Aggregate zu gewährleisten muss danach zusätzlich eine Versiegelungsschicht mit einer ausreichenden Dicke aufgebracht werden.

WO 01/96433 A1 offenbart ein Verfahren zur Modifizierung der Oberflächeneigenschaften von teilchen-, linien-, flächenförmiger oder dreidimensionaler Gebilde, bei dem man auf deren Oberfläche eine wirksame Menge eines Polymers aufbringt, das a) wenigstens ein Polyisocyanat aufweist sowie b) wenigstens eine Verbindung mit mindestens zwei gegenüber Isocyanatgruppen reaktiven Gruppen und zusätzlich mindestens einer tertiären Aminogruppe, worin wenigstens ein Teil der tertiären Aminogruppen in Form ihrer Umsetzungsprodukte mit wenigstens einem Neutralisierungs-und/oder Quaternierungsmittel vorliegt.

EP 2 755 451 A1 zeigt ein Beschichtungssystem auf einem Untergrund zum Schutz vor elektrostatischer Entladung umfassend in eine Grundierung, eine nicht ableitfähige und eine ableitfähige Kunstharzschicht mit einem Erdableitwiderstand nach VDE-0100-410 von mindestens 100 kOhm, wobei zwischen der ableitfähigen und der nicht ableitfähigen Kunstharzschicht eine Erdungseinrichtung zur Erdung des Beschichtungssystems angeordnet ist.

WO 2016/151007 A1 offenbart die Verwendung einer Epoxidharz-Zusammensetzung enthaltend ein Reaktionsprodukt aus der Umsetzung von einem Amin mit einer Carbonylverbindung und Wasserstoff als kalthärtender Primer oder Klebstoff. Die beschriebenen Primer oder Klebstoffe härten sowohl bei Umgebungstemperatur als auch bei kalten Temperaturen schnell und störungsfrei aus, neigen wenig zum Vergilben, sind frei von toxischen PhenolVerbindungen und niedrigviskos.

Diese beiden zusätzlichen Schritte sind nicht nur zeit- sondern auch materialaufwändig.

### Darstellung der Erfindung

Daher bestand die Aufgabe der Erfindung darin, die oben diskutierten Probleme des Standes der Technik zu überwinden, insbesondere um ein Bodenbeschichtungssystem bereitzustellen, das eine ausreichende Oberflächenrauhigkeit gewährleistet, schneller erstellt werden kann und mit weniger Materialaufwand verbunden ist.

Überraschenderweise könnte diese Aufgabe durch die Bereitstellung eines Beschichtungssystems gemäss dem ersten Hauptanspruch gelöst werden.

Die Aufgabe konnte überraschenderweise durch ein nachgehend beschriebenes Beschichtungssystem gelöst werden. Dieses Beschichtungssystem zeichnet sich dadurch aus, dass die daraus erhaltenen Beschichtungen einerseits die Zuschlagstoffe wie beispielsweise Sand bereits enthalten und ein nachträgliches Abstreuen daher entfällt. Andererseits entfällt das Entfernen und kostenträchtige Entsorgen des überschüssigen/nicht eingebundenen Quarzsands. So werden im Stand der Technik typischerweise auf 2.5 kg Beschichtung 8 kg Sand zum Abstreuen verwendet, davon wird 4 kg wieder weggefegt und muss entsorgt werden. Die erfindungsgemässen Beschichtungssysteme kommen hingegen mit einer ca. halb so grossen Menge Sand aus.
Weiter wird durch das Beschichtungssystem eine ausreichende Oberflächenrauhigkeit erreicht und die erhaltenen Beschichtungen gewährleisten eine sichere und langfristige Verbindung der Aggregate zur Beschichtung. Die Anforderung einer zusätzlichen Versiegelungsschicht mit einer ausreichenden Dicke, um eine sichere und langfristige Verbindung der Aggregate zur Beschichtung zu gewährleisten, entfällt daher.

Bevorzugte Ausführungsformen der Zusammensetzung sind in den abhängigen Ansprüchen wiedergegeben. Im Folgenden wird die Erfindung ausführlich erläutert.

### Weg zur Ausführung der Erfindung

Die Erfindung betrifft ein Beschichtungssystem umfassend:
- mindestens ein Reaktionsharzsystem **RH;**
- mindestens ein Thixotropierhilfsmittel **TH** ausgewählt aus der Gruppe bestehend aus Harnstoffzubereitungen **HZ** und Fasern **FS;**
- mindestens einen anorganischen Zuschlagstoff **AZ** mit einer Partikelgrösse im Bereich von 0.2 bis 3.0 mm;
wobei das Beschichtungssystem 3 min nach dem Mischen aller Komponenten des Beschichtungssystems mit Ausnahme des mindestens einen anorganischen Zuschlagstoffs **AZ** eine Viskosität gemessen bei 23°C mittels eines Rheometers mit beheizbarer Platte (Rheotec MRC300) (Spalt 0.5 mm, Mess-Plattendurchmesser : 50 mm (Platte/Platte)) mit einer Scherrate von 1 s⁻¹ von 9'000 - 100'000 Pas und eine Viskosität gemessen mit einer Scherrate von 100 s⁻¹ von 400 - 15'000 Pas aufweist.

Als "Diol-Kettenverlängerer" wird ein organisches Diol bezeichnet, welches kein Polymer darstellt.
Als "Diphenylmethandiisocyanat" oder abgekürzt "MDI" werden alle isomeren Formen von Diphenylmethandiisocyanat und beliebige Mischungen davon bezeichnet, insbesondere Diphenylmethan-4,4'-diisocyanat, Diphenylmethan-2,4'-diisocyanat und Diphenylmethan-2,2'-diisocyanat.
Als "primäre Hydroxylgruppe" wird eine OH-Gruppe bezeichnet, welche an ein C-Atom mit zwei Wasserstoffen gebunden ist.
Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.
Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.
Als "Raumtemperatur" wird eine Temperatur von ca. 23°C bezeichnet.

Das Beschichtungssystem umfasst mindestens ein Thixotropierhilfsmittel **TH** ausgewählt aus der Gruppe bestehend aus Harnstoffzubereitungen **HZ** und Fasern **FS.**

Die Harnstoffzubereitung **HZ** ist vorzugsweise eine Lösung eines Harnstoffurethans, vorzugsweise in Gegenwart eines Alkalimetalkations, insbesondere eines Lithiumhalogenidsalzes, in einem aprotischen Lösungsmittel.

Vorzugsweise ist das Harnstoffurethan aus einem monofunktionellen C4- bis C22-Alkylalkohol oder Cycloalkylalkohol, einem Diisocyanat und einem Diamin aufgebaut. Die Herstellung solcher Harnstoffurethane ist in den folgenden Schriften beschrieben: DE 19919482 C2, DE 10039837 C2 oder DE 10 2006 012999 A.

Als aprotische Lösungsmittel eignen sich z. B. N-Methylpyrrolidon, N-Butylpyrrolidon, N-Cyclohexylpyrrolidon, N-Ethylpyrrolidon, DMSO oder andere dem Fachmann bekannte aprotische Lösungsmittel.
Unter dem Begriff "aprotische Lösungsmittel" werden in diesem Dokument insbesondere nichtwässrige Lösemittel, die kein ionisierbares Proton im Molekül enthalten, verstanden.

Die Alkalimetallkationen werden bevorzugt in Form eines Halogenidsalzes bereitgestellt. Bevorzugt sind Natrium-, Kalium- und Lithiumhalogenidsalze. Insbesondere können Natriumchlorid, Natriumjodid, Natriumbromid, Kaliumchlorid, Kaliumjodid, Kaliumbromid, Lithiumchlorid, Lithiumjodid, Lithiumbromid und Kombinationen davon eingesetzt werden. Besonders bevorzugt sind Lithiumhalogenidsalze

Eine besonders bevorzugte Harnstoffzubereitung ist die Kombination eines Lithiumhalogenidsalzes und eines Reaktionsprodukts, das durch Umsetzung einer Monohydroxyverbindung mit einem Diisocyanat gebildet wird. Das Monoisocyanat-Erstaddukt wird anschließend mit einem Polyamin in Gegenwart von Lithiumchlorid und 1-Methy-2-pyrrolidon umgesetzt, um ein zweites Addukt zu bilden.
Ein handelsübliches Additiv dieser Art wird von BYK Chemie, Wallingford, unter dem Handelsnamen BYK 410 verkauft. Dieses handelsübliche Additiv wird von BYK-Chemie beschrieben als Harnstoffurethan mit einer geringen Menge an Lithiumchlorid in einem 1- Methyl-2-pyrrolidon-Lösungsmittel.

Die Fasern **FS** umfassen oder bestehen vorzugsweise aus organischem, anorganischem oder synthetischem Material.

Insbesondere handelt es sich um Zellulose-, Baumwollfasern, Proteinfasern, Glasfasern oder um synthetische Fasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein.

Vorzugsweise handelt es sich um Glas-, Carbon- oder Kunststofffasern. Besonders bevorzugt bestehen die Fasern aus einem Material ausgewählt aus der Gruppe bestehend aus Polyethylen mit hoher Dichte (HDPE), Polyethylenterephthalat (PET), Polystyrol (PS), Polyethylen (PE), Polypropylen (PP), Polyvinylchlorid (PVC), Polyamid (PA), Glas und Carbon und Kombinationen davon.
Am meisten bevorzugt handelt es sich um Polyethylen- oder Polypropylenfasern.

Es kann weiter vorteilhaft sein, wenn die Fasern aus einem anorganischen Material, insbesondere aus Glas, bestehen.

Vorzugsweise weisen die Fasern eine Faserlänge von 0,05 bis 1 mm, vorzugsweise von 0,1 bis 0,5 mm, insbesondere von 0,1 bis 0,3 mm, besonders bevorzugt von 0,1 bis < 0.3 mm, auf.
Vorzugsweise weisen die Fasern einen Faserdurchmesser von 0.01 - 50µm, insbesondere 0.05 - 20 µm, bevorzugt 0.05 - 5 µm, 0.05 - 1 µm, besonders bevorzugt 0.05 - 0.5 µm, auf.

Bevorzugte Fasern sind beispielsweise als Stellmittel T (Polyethylen-Fasern) bei Sika Schweiz AG erhältlich.

Das Beschichtungssystem umfasst mindestens einen anorganischen Zuschlagstoff **AZ** mit einer Partikelgrösse im Bereich von 0.2 bis 3.0 mm.

Vorzugsweise weist der anorganische Zuschlagstoff **AZ** eine Partikelgrösse im Bereich von 0.3 bis 2.0 mm, bevorzugt im Bereich 0.3 bis 1.5 mm, insbesondere im Bereich von 0.5 bis 1.2 mm, auf.
Vorzugsweise versteht man in diesem Dokument unter dem Begriff "Partikelgrösse" die "mittlere Partikelgrösse". Der Begriff "mittlere Partikelgrösse" bezieht sich hier vorzugsweise auf den D50-Wert der kumulativen Volumenverteilungskurve, bei der 50 Vol.-% der Partikel einen Durchmesser aufweisen, der kleiner als der Wert ist. Die mittlere Partikelgrösse oder der D50-Wert wird vorzugsweise durch Laserdiffraktometrie bestimmt.

Vorzugsweise haben die anorganischen Zuschlagstoffe eine Rohdichte von > 2,0 kg/dm³.
Die anorganischen Zuschlagstoffe können insbesondere bereits natürlich vorliegen (fluvial oder glazial) oder sie werden durch mechanische Prozesse, wie Zusammenmischen, Zerkleinern, Sieben, Waschen, in industriellen Anlagen aufbereitet (mechanische Aufbereitung).

Es kann sich um anorganische Zuschlagstoffe aus natürlichen Vorkommen handeln, z. B. Flusskies, Moränenkies etc, welche typischerweise eine Rohdichte von 2,2 - 3 kg/dm³ aufweisen. Möglich sind jedoch auch Recyclinggranulate aus gebrochenem altem Beton mit einer Rohdichte von ca. 2,4 kg/dm³.

Besonders bevorzugt sind anorganische Zuschlagstoffe aus Quarzsand oder Korund, insbesondere aus Quarzsand.

Besonders geeignete anorganische Zuschlagstoffe weisen eine Sieblinie im Bereich von 0.3 bis 2.0 mm, bevorzugt im Bereich 0.3 bis 1.5 mm, insbesondere im Bereich von 0.5 bis 1.2 mm, auf.
Bevorzugt werden zur Bestimmung der Sieblinie Maschensiebe nach DIN ISO 3310-1 verwendet.

Vorzugsweise beträgt der Anteil des anorganischen Zuschlagstoffs **AZ** 40 - 70 Gew.-%, insbesondere 40 - 60 Gew.-%, 50 - 60 Gew.-%, insbesondere bevorzugt 50 - 55 Gew.-%, bezogen auf das Gesamtgewichts des Beschichtungssystems.

Das Beschichtungssystem umfasst mindestens ein Reaktionsharzsystem **RH.** Kunstharzschichten werden aus gehärteten Reaktionsharzen oder Reaktionsharzsystemen gebildet, wobei unter Reaktionsharzsysteme üblicherweise Reaktionsharze verstanden werden, die ein oder mehrere Additive, z.B. Füllstoffe und/oder Lösemittel, enthalten. Zur Bildung der Kunstharzschichten werden Reaktionsharze, gewöhnlich mithilfe eines Härters, der auch Beschleuniger enthalten kann, zur Reaktion gebracht. Die Reaktion führt zur Viskositätserhöhung und schließlich zur Härtung des Reaktionsharzes. Man erhält ein Kunstharz, das gewöhnlich duroplastisch ist.

Solche Reaktionsharzsysteme sind in großer Vielfalt im Handel erhältlich. Häufig handelt es sich um Zweikomponentensysteme, bei denen die eine Komponente das Reaktionsharz und die andere den Härter oder Beschleuniger umfasst. Ferner werden auch 3- oder höherkomponentige Systeme eingesetzt, z.B. wenn zusätzlich ein Zementbindemittel oder gebräuchliche oder spezielle Füllstoffgemische eingesetzt werden. Es sind auch einkomponentige Systeme möglich. Bei Systemen mit zwei, drei oder mehr Komponenten werden die Komponenten miteinander gemischt und dann verarbeitet. Durch chemische Reaktion nach der Mischung härten die Reaktionsharze nach einer gewissen Zeit aus und bilden so die Schicht. Die Reaktionsharze können z.B. für die Verarbeitung selbstverlaufend oder spachtelfähig eingestellt werden.

Die Reaktionsharze werden unabhängig voneinander bevorzugt ausgewählt aus Epoxidharzen, Polyurethanen, Polyharnstoffen, Gemischen von Polyurethanen und Polyharnstoffen und Poly(meth)acrylaten.

Besonders bevorzugt sind die Reaktionsharze ausgewählt aus Epoxidharzen und Polyurethanen, insbesondere Polyurethanen.

Unter Reaktionsharzen zur Herstellung der Kunstharze werden vorzugsweise nicht Reaktionsharze verstanden, die Anteile von Zement enthalten, wie zementöse Hybridsysteme und polymervergütete zementöse Mischungen. Solche zementhaltigen Reaktionsharze sind im Handel erhältlich. Zementöse Hybridsysteme werden z.B. von der Sika AG vertrieben, z.B. Sikafloor®-EpoCem-Produkte, ein Dreikomponentensystem, das Epoxidharz und Zement umfasst, oder Sikafloor®-PurCem-Produkte, ebenfalls ein Dreikomponentensystem umfassend Polyurethanharz und eine zementöse Komponente. Weiterhin werden auch zwei- und dreikomponentige Kunstharze als zementhaltige Reaktionsharze verstanden wie die Sikafloor®-HyCem-Produkte, bei denen eine Komponente aus Kunstharzdispersionen oder Kunstharzemulsionen bestehen kann.

Das Beschichtungssystem kann nach Bedarf ein oder mehrere Additive enthalten. Durch Zugabe von Additiven zu dem Beschichtungssystem können die Eigenschaften der daraus gebildeten Beschichtungen modifiziert werden. Durch Additive können z.B. die Viskosität oder die Farbe der Beschichtungen eingestellt werden.
Die Additive können in dem Beschichtungssystem bereits enthalten sein oder dem Beschichtungssystem vor der Verarbeitung zugemischt werden.

Beispiele für mögliche Additive sind, neben Lösemittel und Wasser, farbgebende Mittel, wie Farbquarze, Farbstoffe, Pigmente, Füllstoffe, wie Quarzsande, keramische Pulver, Sand, Kreide, Emulgatoren, Filmbildehilfsmittel.

Als geeignete Handelsprodukte, die als Reaktionsharzsysteme geeignet sind, können beispielhaft Sikafloor®-264, Sikafloor®-266CR und Sikafloor®-269CR der Sika AG genannt werden, bei denen es sich um zweikomponentige Epoxidharze handelt. Sikafloor®-266CR und Sikafloor®-269CR sind lösemittelfreie Systeme, so dass sie eine äußerst geringe TVOC-Emission aufweisen. Ergänzend können auch zweikomponentige Polyurethanbschichtungen der Sika AG genannt werden, wie beispielsweise Sikafloor®-300N und Sikafloor®-326.

Vorzugsweise beträgt der Anteil des Reaktionsharzsystems **RH** 20 - 60 Gew.-%, insbesondere 30 - 60 Gew.-%, insbesondere bevorzugt 40 - 50 Gew.-%, bezogen auf das Gesamtgewichts des Beschichtungssystems.

Bevorzugt als Reaktionsharzsysteme sind insbesondere solche, die Polyurethane als Reaktionsharz aufweisen.

Besonders bevorzugt ist ein Reaktionsharzsystem **RH** bestehend aus einer ersten Komponente enthaltend
- mindestens ein Polymer-Polyol, welches eine Dispersion eines bei Raumtemperatur festen Polymers in einem bei Raumtemperatur flüssigen Polyetherpolyol ist, oder mindestens ein Polyol **P1a** mit einem mittleren Molekulargewicht von 800 bis 30'000 g/mol, und
- gegebenenfalls mindestens einen Diol-Kettenverlängerer , und
- gegebenenfalls weitere Polyole,
und einer zweite Komponente enthaltend Diphenylmethandiisocyanat;

Eine besonders bevorzugte erste Komponente enthält
- mindestens ein Polymer-Polyol, welches eine Dispersion eines bei Raumtemperatur festen Polymers in einem bei Raumtemperatur flüssigen Polyetherpolyol ist,
- gegebenenfalls einen Diol-Kettenverlängerer,
- gegebenenfalls weitere Polyole,
wobei der Anteil an festem Polymer aus dem Polymer-Polyol bezogen auf die Summe aus Polymer-Polyol und gegebenenfalls weiteren Polyolen im Bereich von 30 bis 100 Gewichts-%, insbesondere 50 bis 75 Gewichts-%, liegt.

Dabei liegen das Polymer-Polyol, der Diol-Kettenverlängerer und weitere Polyole vorzugsweise in einer solchen Menge vor, dass von der Gesamtzahl ihrer gegenüber Isocyanaten reaktiven Gruppen
- 50% bis 100%, insbesondere 75% bis 95%, aus dem Polymer-Polyol und gegebenenfalls vorhandenen weiteren Polyolen,
- 0% bis 20%, insbesondere 5% bis 10%, aus dem Diol-Kettenverlängerer, stammen.

Das Verhältnis der gegenüber Isocyanatgruppen reaktiven Gruppen wie insbesondere Hydroxylgruppen, primären und sekundären Aminogruppen und Aldiminogruppen zu den Isocyanatgruppen liegt in der Zusammensetzung geeigneterweise im Bereich von 0.5 bis 1.1, bevorzugt im Bereich von 0.7 bis 1.05, besonders bevorzugt im Bereich von 0.8 bis 1.0, insbesondere bei etwa 0.95.

Das feste Polymer weist bevorzugt eine mittlere Partikelgrösse von höchstens 5 µm auf. Die mittlere Partikelgrösse liegt besonders bevorzugt unterhalb von 2 µm, insbesondere im Bereich von 0.1 bis 1 µm.

Geeignete Polymer-Polyole sind Polyetherpolyole enthaltend Polymere und/oder Copolymere vinylischer Monomere wie insbesondere Acrylnitril, Styrol, α-Methylstyrol, Methyl(meth)acrylat oder Hydroxyethyl(meth)acrylat, sowie Polyharnstoffe bzw. Polyhydrazodicarbonamide (PHD) oder Polyurethane, wobei die beiden Phasen eine stabile, lagerfähige Dispersion bilden und das Polymer partiell auf das Polyetherpolyol gepfropft beziehungsweise kovalent ans Polyetherpolyol gebunden sein kann.
Bevorzugt sind Polymer-Polyole, bei welchen das feste Polymer ein Copolymer von Acrylnitril und Styrol (SAN) oder ein Polyharnstoff bzw. Polyhydrazodicarbonamid (PHD) oder ein Polyurethan ist. Diese Polymer-Polyole sind besonders gut herstellbar und lagerfähig. Ganz besonders bevorzugt ist SAN. Dieses ist besonders hydrophob und somit vorteilhaft in Kombination mit Isocyanaten.

Das Polyetherpolyol des Polymer-Polyols ist bevorzugt ein Polyoxyalkylenpolyol, welches durch ringöffnende Polymerisation von Oxiranen, insbesondere Ethylenoxid und/oder 1,2-Propylenoxid, mit Hilfe eines Startermoleküls mit zwei oder mehreren aktiven Wasserstoffatomen, insbesondere Wasser, Glykole wie 1,2-Ethandiol, 1,2- und 1,3-Propandiol, Neopentylglykol, Diethylenglykol, Triethylenglykol, Polyethylenglykole, Dipropylenglykol, Tripropylenglykol oder Polypropylenglykole, oder Triole, insbesondere Glycerin oder 1,1,1-Trimethylolpropan, oder Zuckeralkohole, insbesondere Sorbit (D-Glucitol), oder Diphenole, insbesondere Bisphenol A, oder Amine, insbesondere Ammoniak, Ethylendiamin oder Anilin, oder einer Mischung davon, hergestellt ist.
Besonders bevorzugt ist es ein Polyoxyalkylenpolyol, insbesondere ein Polyoxypropylenpolyol oder ein Ethylenoxid-terminiertes ("EO-endcapped") Polyoxypropylenpolyol.
Das Polyetherpolyol des Polymer-Polyols weist bevorzugt ein Molekulargewicht im Bereich von 400 bis 8000 g/mol, insbesondere 1000 bis 6000 g/mol, auf.
Das Polyetherpolyol des Polymer-Polyols weist bevorzugt eine mittlere OH-Funktionalität im Bereich von 1.75 bis 3.5, insbesondere 2.25 bis 3.0, auf.

Am meisten bevorzugt ist das Polyetherpolyol des Polymer-Polyols ein Ethylenoxid-terminiertes Polyoxypropylentriol mit einem Molekulargewicht im Bereich von1000 bis 6000 g/mol. Ein solches Polymer-Polyol verfügt vorwiegend über primäre Hydroxylgruppen, ist relativ hydrophob und weist eine OH-Funktionalität von mehr als 2 auf, wodurch es besonders geeignet ist für die Kombination mit Isocyanaten.

Das Polymer-Polyol kann aus beliebigen Kombinationen der genannten festen Polymere und der genannten Polyetherpolyole bestehen.

Ein ganz besonders bevorzugtes Polymer-Polyol ist ein Ethylenoxid-terminiertes Polyoxypropylentriol mit einem Molekulargewicht im Bereich von1000 bis 6000 g/mol enthaltend ein SAN-Polymer.

Das Polymer-Polyol weist bevorzugt einen Gehalt an festem Polymer im Bereich von 10 bis 50 Gewichts-% auf.
Als Polymer-Polyol bevorzugt sind kommerziell erhältliche Typen, welche vor allem für die Herstellung von Polyurethan-Weichschäumen verwendet werden, insbesondere die SAN-Polyole Lupranol® 4003/1, Lupranol® 4006/1/SC10, Lupranol® 4006/1/SC15, Lupranol® 4006/1/SC25, Lupranol® 4010/1/SC10, Lupranol® 4010/1/SC15, Lupranol® 4010/1/SC25, Lupranol® 4010/1/SC30 oder Lupranol® 4010/1/SC40 (alle von BASF), Desmophen® 5027 GT oder Desmophen® 5029 GT (beide von Bayer MaterialScience), Voralux® HL106, Voralux® HL108, Voralux® HL109, Voralux® HL120, Voralux® HL400, Voralux® HN360, Voralux® HN370, Voralux® HN380 oder Specflex® NC 700 (alle von Dow), Caradol® SP27-25, Caradol® SP30-15, Caradol® SP30-45, Caradol® SP37-25, Caradol® SP42-15, Caradol® SP44-10 oder Caradol® MD22-40 (alle von Shell), sowie das PHD-Polyol Desmophen® 5028 GT (von Bayer MaterialScience). Davon besonders bevorzugt sind die SAN-Polyole, insbesondere die genannten kommerziell erhältlichen Typen.

Die erste Komponente des Reaktionsharzsystems enthält bevorzugt weiterhin mindestens einen Diol-Kettenverlängerer. Bevorzugt stellt der Diol-Kettenverlängerer ein aliphatisches oder cycloaliphatisches Diol mit einem Molekulargewicht im Bereich von 60 bis 200 g/mol dar.
Bevorzugt enthält der Diol-Kettenverlängerer mindestens eine primäre Hydroxylgruppe.

Bevorzugt enthält dasReaktionsharzsystem mindestens ein weiteres Polyol, welches ein Polyetherpolyol oder ein Poly(meth)acrylatpolyol oder ein polyhydroxyfunktionelles Fett oder Öl ist.

Eine weitere besonders bevorzugte erste Komponente enthält
- mindestens ein Polyol **P1a** mit einem mittleren Molekulargewicht von 800 bis 30'000 g/mol,
- gegebenenfalls einen Diol-Kettenverlängerer,
- gegebenenfalls weitere Polyole,
wobei der Anteil an Polyol **P1a** bezogen auf die Summe aus Polyol **P1a** und gegebenenfalls weiteren Polyolen im Bereich von 70 bis 100 Gewichts-% liegt.

Dabei liegen das Polyol **P1a**, der Diol-Kettenverlängerer und weitere Polyole vorzugsweise in einer solchen Menge vor, dass von der Gesamtzahl ihrer gegenüber Isocyanaten reaktiven Gruppen
- 50% bis 100%, insbesondere 75% bis 95%, aus dem Polyol **P1a** und gegebenenfalls vorhandenen weiteren Polyolen,
- 0% bis 10%, insbesondere 0% bis 5%, aus dem Diol-Kettenverlängerer, stammen.

Beispiele für geeignete Polyole **P1a** sind Polyoxyalkylenpolyole, auch als "Polyetherpolyole" bezeichnet, Polyesterpolyole, Polycarbonatpolyole, Poly(meth)acrylatpolyole, Polykohlenwasserstoffpolyole, polyhydroxyfunktionelle Acrylnitril / Butadien-Copolymere und deren Mischungen, insbesondere deren Diole und Gemische davon .

Beispiele für Polyetherpolyole sind Polyoxyethylenpolyole, Polyoxypropylenpolyole und Polyoxybutylenpolyole, insbesondere Polyoxyethylendiole, Polyoxypropylendiole, Polyoxybutylendiole, Polyoxyethylentriole und Polyoxypropylentriole. Polyoxyalkylendiole oder Polyoxyalkylentriole mit einem Ungesättigtheitsgrad von weniger als 0,02 meq / g und einem mittleren Molekulargewicht im Bereich von 1000 bis 30'000 g / mol und Polyoxyethylendiole, Polyoxyethylentriole, Polyoxypropylendiole und Polyoxypropylentriole mit einem mittleren Molekulargewicht von 800 bis 8'000 g / mol sind geeignet.

Weitere Beispiele für Polyetherpolyole sind sogenannte Ethylenoxid-terminierte ("EO-endcapped", Ethylenoxid-endverkappte) Polyoxypropylenpolyole, Styrol-Acrylnitril-gepfropfte Polyetherpolyole, z.B. Lupranol® von der Elastogran GmbH, Deutschland.

Besonders bevorzugte Polyole **P1a** sind polyhydroxyfunktionelle natürliche Fette und / oder Öle, wie Rizinusöl oder Polyole, die durch chemische Modifizierung von natürlichen Fetten und / oder Ölen erhalten werden. Rizinusöl ist besonders bevorzugt.

Das Verhältnis der gegenüber Isocyanatgruppen reaktiven Gruppen wie insbesondere Hydroxylgruppen, primären und sekundären Aminogruppen und Aldiminogruppen zu den Isocyanatgruppen liegt in der Zusammensetzung geeigneterweise im Bereich von 0.5 bis 1.1, bevorzugt im Bereich von 0.7 bis 1.05, besonders bevorzugt im Bereich von 0.8 bis 1.0, insbesondere bei etwa 0.95.

Die zweite Komponente des Reaktionsharzsystems enthält Diphenylmethandiisocyanat (MDI). Als MDI bevorzugt sind Diphenylmethan-4,4'-diisocyanat (4,4'-MDI), Diphenylmethan-2,4'-diisocyanat (2,4'-MDI) und/oder Diphenylmethan-2,2'-diisocyanat (2,2'-MDI). Besonders bevozugt ist 4,4'-MDI. Damit werden besonders hohe Festigkeiten erreicht. Bevorzugt weist die zweite Komponente einen Gehalt an monomerem Diphenylmethandiisocyanat im Bereich von 20 bis 100 Gewichts-%, besonders bevorzugt 40 bis 100 Gewichts-%, insbesondere 60 bis 100 Gewichts-%, auf.

Das Beschichtungssystem weist 3 min nach dem Mischen aller Komponenten des Beschichtungssystems mit Ausnahme des mindestens einen anorganischen Zuschlagstoffs **AZ** eine Viskosität bei einer Scherrate von 1 s⁻¹ von 9'000 - 100'000 Pas und eine Viskosität gemessen bei einer Scherrate von 100 s⁻¹ von 400 - 15'000 Pas auf.
Die Messung der vorgehend genannten Viskositäten bei den verschiedenen Scherraten erfolgt bei 23°C mittels eines Rheometers mit beheizbarer Platte (Rheotec MRC300) (Spalt 0.5 mm, Mess-Plattendurchmesser : 50 mm (Platte/Platte)).

Die Bestimmung der vorgenannten Viskositäten in Abwesenheit des mindestens einen anorganischen Zuschlagstoffs **AZ** ist dem Umstand geschuldet, dass eine Viskositätsbestimmung des Beschichtungssystems enthaltend den anorganischen Zuschlagstoffs **AZ** zu einer Beschädigung des Messgeräts führen würde.

Vorzugsweise weist das Beschichtungssystem 3 min nach dem Mischen aller Komponenten des Beschichtungssystems mit Ausnahme des mindestens einen anorganischen Zuschlagstoffs **AZ** eine Viskosität bei einer Scherrate von 1 s-1 von 10'000 - 80'000 Pas, 15'000 - 80'000 Pas, 20'000 - 80'000 Pas, 25'000 - 80'000 Pas, auf; und weist
eine Viskosität gemessen bei einer Scherrate von 100 s-1 von 400 - 12'000 Pas, 1'000 - 10'000 Pas, 1'000 - 8'000 Pas, 1'000 - 6'500 Pas, besonders bevorzugt 2'000 - 6'500 Pas, auf.

Überraschenderweise wurde gefunden, dass bei Zusammensetzungen, welche beide Viskositäten (Scherrate von 1 s-1 sowie Scherrate von 100 s-1) in dem vorgenannten Bereichen aufweisen, zu einer hohen Oberflächenrauhigkeit führen bei gleichzeitig gewährleisteter Verarbeitbarkeit. Weiter sind hohe Viskositätswerte bei einer Scherrate von 100 s-1 für eine gute Verarbeitbarkeit förderlich.

Weiter ist es vorteilhaft, wenn das Beschichtungssystem bei 23°C 3 min - 10 min, 3 min - 20 min, insbesondere 3 min - 30 min, besonders bevorzugt 3 min - 60 min, nach dem Mischen aller Komponenten des Beschichtungssystems mit Ausnahme des mindestens einen anorganischen Zuschlagstoffs **AZ** eine vorgehend genannte Viskosität (Scherrate von 1 s-1 sowie Scherrate von 100 s-1) aufweist.

Mit dem Mischen des Beschichtungssystems beginnt die Aushärtungsreaktion. Die Reaktionsharze werden, gewöhnlich mithilfe eines Härters, der auch Beschleuniger enthalten kann, zur Reaktion gebracht. Die Reaktion führt zur Viskositätserhöhung und schließlich zur Härtung des Reaktionsharzes, wodurch das Beschichtungssystem schließlich aushärtet.

Somit beschreibt die vorliegende Erfindung auch eine ausgehärtete Zusammensetzung, erhalten aus einem vorgehend genannten Beschichtungssystem nach dem Vermischen der Komponenten und deren Aushärtung.

In einem weiteren Aspekt betrifft die Erfindung auch eine Verwendung eines vorgehend beschriebenen Beschichtungssystems als Beschichtung.

Als Untergrund für die Beschichtung, insbesondere die Boden- vorzugsweise insbesondere Industrieböden-, Brücken- und Parkdeckbeschichtung, eignen sich prinzipiell alle Untergründe, die in Bauwerken vorhanden sind. Beispiele für geeignete Untergründe sind Beton, Zement-Estrich, Magnesia-Estrich, Keramikfliesen, Asphalt und gegebenenfalls bereits bestehende Kunstharzbeschichtungen.

Bei dieser Verwendung kann es sich vorzugsweise um eine Verwendung in einem Bodenbeschichtungssystem handeln, umfassend
- gegebenenfalls einen Primer und/oder eine Grundierung und/oder eine Reparatur- oder Nivelliermasse,
- mindestens eine Schicht des vorgehend beschriebenen Beschichtungssystems,
- gegebenenfalls eine Versiegelung.

Zur Herstellung der erfindungsgemäßen Beschichtung wird auf den Untergrund, gegebenenfalls nach üblicher Untergrundvorbehandlung, wie z.B. Schleifen, Sandstrahlen, Kugelstrahlen oder Ablaugen mit Lösemitteln oder Säuren, vorzugsweise ein Primer und/oder eine Grundierung und/oder eine Reparatur- oder Nivelliermasse aufgebracht. Bevorzugt wird eine Grundierung aufgebracht. Für die Grundierung wird eine übliche Grundierungszusammensetzung aufgebracht, z.B. ein Reaktionsharz bzw. eine Reaktionsharzmasse oder alternativ auch eine Kunstharzdispersion auf wässriger Basis und gehärtet. Bevorzugt handelt es sich um eine Kunstharz-Grundierung auf Basis von gehärteten Reaktionsharzen.

Bei der Applikation wird das frisch vermischte Beschichtungssystem mit der erfindungsgemässen Viskosität als Schicht auf einen ebenen oder leicht geneigten Untergrund appliziert, typischerweise indem sie auf den Untergrund, insbesondere den Primer und/oder Grundierung und/oder Reparatur- oder Nivelliermasse, gegossen und anschliessend flächig bis zur erwünschten Schichtdicke verteilt wird, beispielsweise mittels einer Rolle, einem Schieber, einer Zahntraufel oder einer Spachtel.

Vorzugsweise erfolgt die Applikation innerhalb der Offenzeit des Beschichtungssystems. Als "Offenzeit" oder auch "Topfzeit" wird dabei die Zeitspanne zwischen dem Vermischen der Komponenten und dem Ende eines für die Verarbeitung geeigneten Zustands der Zusammensetzung bezeichnet. Ein typisches Mass für das Ende der Topfzeit kann eine Verdoppelung der vorgehend genannten erfindungsgemässen Viskositäten (Scherrate von 1 s-1 sowie Scherrate von 100 s-1) sein.

Nach dem Auftrag des Beschichtungssystems wird dieses vorzugsweise mittels Walze, insbesondere Strukturwalze, bearbeitet. Eine solche Strukturwalze hat vorzugsweise eine Walzenbreite von 10 - 80 cm, insbesondere 15 - 40 mm, und einen Walzendurchmesser von 4-20 mm, insbesondere 6 - 10 mm.
Diese Bearbeitung, insbesondere überrollen, mittels Walze, insbesondere Strukturwalze, erfolgt vorzugsweise innerhalb der Offenzeit des Beschichtungssystems. Vorzugsweise erfolgt die Bearbeitung unmittelbar nach Applikation der Beschichtungssystems, vorzugsweise 5 - 20 min nach Applikation des Beschichtungssystems.
Weiter ist es bevorzugt, wenn die Bearbeitung innerhalb des Zeitraums stattfindet, indem das Beschichtungssystem die erfindungsgemässen Viskositäten (Scherrate von 1 s-1 sowie Scherrate von 100 s-1) aufweisen. Vorzugsweise besteht die Walze aus Kunststoff, insbesondere einem Schaumstoff aus Kunststoff, insbesondere einem offenporigen Schaumstoff aus Kunststoff. Eine kommerziell erhältliche Strukturwalze ist beispielsweise als Strukturwalze Rollo-Schaum, grob (Walzenbreite 25 cm, Walzendurchmesser 80 mm) von Friess-Techno-Profi GmbH, Deutschland erhältlich.

In einem Arbeitsgang wird vorzugsweise eine Schichtdicke im Bereich von 1.5 bis 6 mm, 3 bis 5 mm, insbesondere 3 bis 4.5 mm, aufgetragen.

Das beschriebene Beschichtungssystem wird vorzugsweise einschichtig appliziert.

Vorzugsweise werden auf die beschriebene Schicht des Beschichtungssystems keine weiteren Zuschlagstoffe wie beispielsweise Sand, Kies oder sonstige vorgehend genannten Zuschlagstoffe nach der Applikation der Schicht des Beschichtungssystems aufgebracht/eingestreut.

Auf die beschriebene Schicht des Beschichtungssystems können eine oder mehrere Deckbeschichtungen aufgetragen werden. Als oberste bzw. letzte Schicht wird vorzugsweise eine Versiegelung appliziert.

Es kann einerseits vorteilhaft sein, wenn auf beschriebene Schicht des Beschichtungssystems keine weiteren Schichten aufgetragen werden. Durch die wegfallende Anforderung an eine zusätzliche Deckbeschichtungen zur Sicherstellung einer ausreichenden Verbindung der anorganischen Zuschlagstoffe **AZ** mit dem ausgehärteten Reaktionsharzsystem **RH** des Beschichtungssystems können schneller und kostengünstiger Bodenbeschichtungen hergestellt werden.

Es kann andererseits aber auch vorteilhaft sein, wenn auf die beschriebene Schicht des Beschichtungssystems weitere Schichten aufgetragen werden.

Besonders bevorzugt wird nur eine zusätzliche Schicht, insbesondere eine Versiegelung, aufgetragen.
Als "Versiegelung" wird dabei eine transparente oder pigmentierte, hochwertige Beschichtung bezeichnet, welche als oberste dünne Schicht auf eine Beschichtung appliziert wird. Sie schützt und veredelt deren Oberfläche.
Eine typische Schichtdicke dabei ist im trockenen Zustand im Bereich von 0.03 bis 1 mm, insbesondere 0.03 bis 0.3 mm, besonders bevorzugt 0.1 bis 0.2 mm (ca. 150 g/m²).

Diese Schichtdicke der Versiegelung ist geringer als für typische Versiegelungen im Stand der Technik, welche zusätzlich noch die Fixierung der nachträglich eingestreuten Aggregate gewährleisten sollen und typischerweise eine Schichtdicke von 0.5 - 1.5 mm (mehr als 700 g/m²) aufweisen.
Diese geringere Schichtdicke ist dahingehend von Vorteil, dass:
- Kostenreduktion durch geringeren Materialverbrauch entsteht
- geringere Anforderungen an die mechanischen Eigenschaften der Versiegelung da sie nicht zur mechanischen Beständigkeit betragen muss.

Die Versiegelung bietet einen zusätzlichen Schutz vor UV-Licht, Oxidation oder mikrobiellem Bewuchs, bietet ästhetische Gestaltungsmöglichkeiten und verhindert das Anschmutzen.

Besonders bevorzugt ist die Verwendung in einem Bodenbeschichtungssystem ausgewählt aus der Gruppe bestehend aus Bodenbeschichtungssystemen für Balkone, Terrassen, Plätze, Industrieböden, Brücken und Parkdecks, insbesondere Industrieböden, Brücken und Parkdecks, besonders bevorzugt Parkdecks.

Ein weiterer Vorteil der vorliegenden Erfindung ist der Umstand, dass bei den abgestreuten Systemen im Stand der Technik der aufgebrachte Sand zuerst mit dem Versiegelungsmaterial "benetzt" werden muss. Dabei wird einerseits ein Teil des Versiegelungsmaterial vom Sand absorbiert und weiter führt diese Benetzungszeit zu einer zusätzlichen Verlängerung dieses Arbeitsschrittes. Das "Benetzen" sowie der damit verbundene Materialverlust entfällt bei der vorliegenden Erfindung.

Weiter wurde überraschenderweise gefunden, dass ein Aufbringen derselben Menge an Versiegelungsmaterial auf ein Beschichtungssystem der vorliegenden Erfindung mit weniger Kraftaufwand beim Verteilen des Versiegelungsmaterials erfolgen konnte als auf ein abgesandetes System des Standes der Technik.

In einem weiteren Aspekt betrifft die Erfindung auch ein Verfahren zur Herstellung einer Beschichtung mit einem vorgehend beschriebenen Beschichtungssystem, wobei das Verfahren folgende Verfahrensschritte umfasst:
a) Mischen von Reaktionsharzsystem **RH,** Thixotropierhilfsmittel **TH** und anorganischen Zuschlagstoffen **AZ** wie sie vorgehend beschrieben sind um ein vorgehend beschriebenes Beschichtungssystem zu erhalten,
b) Aufbringen des erhaltenen Beschichtungssystems auf einen Untergrund,
c) vorzugsweise Bearbeiten des aufgebrachten Beschichtungssystems und
d) Aushärten des aufgebrachten Beschichtungssystems.

Bei den erwähnten Untergründen handelt es sich vorzugsweise um einen

Untergrund wie er vorgehend beschrieben wurde.

Weiter ist in diesem Verfahren die Herstellung von Beschichtungen bevorzugt, wie sie vorgehend als bevorzugte Bodenbeschichtungen beschrieben sind.

Das Mischen von Reaktionsharzsystem **RH,** Thixotropierhilfsmittel **TH** und anorganischen Zuschlagstoffen **AZ** erfolgt vorzugsweise:
- bei Temperaturen im Bereich von 5 bis 40°C;
- innerhalb von 1 - 10 min, insbesondere innerhalb von 2 - 6 min.

Das Aufbringen des erhaltenen Beschichtungssystems erfolgt vorzugsweise wie vorgehend beschrieben für die Verwendung des Beschichtungssystems, insbesondere in Bezug auf eine mögliche Untergrundsvorbehandlung, der Applikation des Beschichtungssystems, Bearbeitung des applizierten Beschichtungssystems mittels Rolle, insbesondere Strukturrolle, sowie Schichtdicke. Die vorgehend in diesem Zusammenhang als bevorzugt angegebenen Ausführungsformen sind für das Verfahren auch bevorzugt.

Es ist insbesondere bevorzugt, wenn nach dem Schritt c) auf die beschriebene Schicht des Beschichtungssystems keine weiteren Zuschlagstoffe wie beispielsweise Sand, Kies oder sonstige vorgehend genannten Zuschlagstoffe nach der Applikation des Beschichtungssystems aufgebracht/eingestreut wird.

Nach dem Schritt d) kann es vorteilhaft sein, keine weiteren Schichten aufzutragen, wie es vorgehend als bevorzugt bei der Verwendung des Beschichtungssystems ausgeführt wurde.

Vorzugsweise wird jedoch nach dem Schritt d) eine weitere Schicht aufzutragen, insbesondere eine Versiegelung, wie es vorgehend als bevorzugt bei der Verwendung des Beschichtungssystems ausgeführt wurde.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Verwendete kommerzielle Substanzen:

| | |
|---|---|
| Sikafloor®-161 | Zweikomponentige Eppoxidharzbeschichtung, Sika AG |
| Sikafloor®-32 Pronto | Dreikomponentige Polymethylmethacrylat-Beschichtung, Sika AG |
| Sikafloor®-377 | Zweikomponentige Polyurethanbeschichtung, Sika AG |
| Stellmittel T | Stellmittel T, Thixotropierungsmittel, Polyethylen-Fasern, Faserlänge: < 0.3 mm, Faserstärke: ca. 0.1 µm, Sika AG |
| BYK 410 | Harnstoffurethan mit einer geringen Menge an Lithiumchlorid in einem 1-Methyl-2-pyrrolidon-Lösungsmittel, BYK Chemie |
| Bentone | BENTONE SD-2, Organisches Derivat von Bentonit, Elementis Specialties |
| Quarzsand | Sieblinie = 0.6 - 1.2 mm, Partikelgrösse = 0.6 - 1.2 mm, Gebrüder Dorfner GmbH & Co, Deutschland |

### Herstellung und Applikation der gemischten Beschichtungssystemesowie Prüfungsmethoden:

Die Komponenten des betreffenden Reaktionsharzsystems (Reaktionsharzsystem **RH** und Thixotropierhilfsmittel **TH**) werden im angegebenen Mischungsverhältnis mit einem Flügelrührer gemischt und nach guter Durchmischung (ca. 1 Minute) wird das Thixotropierhilfsmittel **TH** gemäss der Mengenangabe in Tabelle 1 kontinuierlich zugegeben und für weitere ca. 1 Minute gemischt.
Unmittelbar danach wurde der Quarzsand zugegeben und zwar in einer Mengen von 125 Gew.-% bezogen auf das Gesamtgewicht der Summe aus gemischtem Reaktionsharzsystem und zugegebenem Thixotropierhilfsmittel **TH.** Es wurde eine weitere Minute gemischt.
Von den gemischten Zusammensetzungen **Z1** - **Z12** wurden unverzüglich die Viskositäten (vor Zugabe des Quarzsands) und das Ausbreitmass geprüft, respektive wurden diese Zusammensetzungen folgendermassen appliziert: Die Probeplatten (30 cm x 100 cm) wurden grundiert (400- 600 g/m²) mit Sikafloor-161. Danach wurden die gemischten Zusammensetzungen **Z1 - Z12** auf der Probeplatte ausgegossen und mit einer Glättkelle auf die Fläche verteilt. Nach einer Wartezeit von ca. 2 Minuten wurde mit einer Schaumlochwalze (Strukturwalze Rollo-Schaum, grob (Walzenbreite 25 cm, Walzendurchmesser 80 mm) von Friess-Techno-Profi Gmbh, Deutschland) nachgerollt. Die Schichtdicke betrug ca. 3 mm.

Die **Viskosität** wurde gemessen bei 23°C mittels eines Rheometers mit beheizbarer Platte (Rheotec MRC300) (Spalt 0.5 mm, Mess-Plattendurchmesser : 50 mm (Platte/Platte)).

Das **Ausbreitmass** wurde in Anlehnung an die EN - 12350 - 5 mittels Schlagtisch bei 23°C bestimmt. Unmittelbar nach dem Vermischen der Komponenten wurden 500 ml der jeweiligen Mischung bis zur Oberkante in den Auslauftrichters eingebracht und auf einer Glasplatte ausgegossen. Danach wurde mittels Schlagtisch mit 15 Schlägen die Probe ausgebreitet. Der mittlere Durchmesser der ausgebreiteten Zusammensetzung wurde nach 5 Minuten gemessen.

Die **Oberflächenrauhigkeit** wird durch den Verarbeiter bestimmt, indem dieser die erhaltenen Oberflächenrauigkeiten mit Werten aus dem Stand der Technik vergleicht. Als Referenz dient ein System, das wie im Stand der Technik bekannt mit Quarzsand abgesandet wurde. Einem solchen System wurde der Wert "rauh" zugeordnet.

Die **Verarbeitbarkeit** wird durch den Verarbeiter während der Applikation bestimmt. Hierbei ist entscheidend, mit welchem Widerstand sich die Beschichtung verteilen lässt. Ziel der Applikation ist eine 3 mm dicke Schicht mit angemessenem Kraftaufwand und in angemessener Zeit mit einer Zahnrakel aufbringen zu können. Als Referenz dienen die auf dem Markt befindlichen selbstverlaufenden Beschichtungssysteme und deren Applikationseigenschaften. Einem solchen Referenzsystem wurde der Wert "+" = gut zugeordnet. Der Wert "o" bedeutet "ausreichend" und "-" bedeutet "ungenügend".

Überraschenderweise wurde gefunden, dass einzig Harnstoffzubereitungen und Fasern innerhalb der erfindungsgemässen Viskositäten zu einer hohen Oberflächenrauhigkeit bei gleichzeitig gewährleisteter Verarbeitbarkeit führen.

Die Verwendung von Bentonen hingegen führt nicht zu einem solchen Verhalten.

**Tabelle 1, n.b. = nicht bestimmt**

| Reaktionsharz | Versuch | Thixotropierhilfsmittel (Gew.-%, bezogen auf Gesamtgewicht Beschichtungssystem) | D=1s-1 | D=5s-1 | D=10s-1 | D=100s-1 | Ausbreitmass | Oberflächen -rauhigkeit | Verarbeitbarkeit |
|---|---|---|---|---|---|---|---|---|---|
| SR-161 | Z1 | - | 2100 | 1340 | 1200 | 1050 | n.b. | glatt | + |
| SR-161 | Z2 | 2 Gew.-% Stellmittel T | 32600 | 13900 | 10300 | 4220 | 189 mm | sehr rauh | + |
| SR-32 | Z3 | - | 1110 | 621 | 546 | 468 | n.b. | glatt | + |
| SR-32 | Z4 | 3 Gew.-% Stellmittel T | 16300 | 6070 | 4530 | 1980 | 191 mm | sehr rauh | + |
| SR-377 | Z5 | - | 2550 | 2590 | 2710 | 2900 | n.b. | glatt | + |
| SR-377 | Z6 | 0.1 Gew.-% BYK 410 | 2710 | 2640 | 2730 | 2830 | n.b. | glatt | + |
| SR-377 | Z7 | 1 Gew.-% BYK 410 | 8270 | 4690 | 4090 | 3230 | n.b. | ganz leichte Rauhigkeit | + |
| SR-377 | Z8 | 5 Gew.-% BYK 410 | 69300 | 23200 | 16000 | 6810 | 195 mm | rauh | O |
| SR-377 | Z9 | 0.5 Gew.-% Stellmittel T | 5040 | 4760 | 4790 | 4490 | n.b. | glatt | + |
| SR-377 | Z10 | 1 Gew.-% Stellmittel T | 8330 | 7000 | 6470 | 5300 | n.b. | ganz leichte Rauhigkeit | + |
| SR-377 | Z11 | 2 Gew.-% Stellmittel T | 27800 | 15800 | 13300 | 8150 | 200 mm | rauh | O |
| SR-377 | Z12 | 5 Gew.-% Bentone | 16400 | 15500 | 16600 | 17700 | n.b. | glatt | - |

## Patentansprüche

1. Beschichtungssystem umfassend:
- mindestens ein Reaktionsharzsystem **RH;**
- mindestens ein Thixotropierhilfsmittel **TH** ausgewählt aus der Gruppe bestehend aus Harnstoffzubereitungen **HZ** und Fasern **FS;**
- mindestens einen anorganischen Zuschlagstoff **AZ** mit einer Partikelgrösse im Bereich von 0.2 bis 3.0 mm;
wobei das Beschichtungssystem 3 min nach dem Mischen aller Komponenten des Beschichtungssystems mit Ausnahme des mindestens einen anorganischen Zuschlagstoffs **AZ** eine Viskosität gemessen bei 23°C mittels eines Rheometers mit beheizbarer Platte (Rheotec MRC300) (Spalt 0.5 mm, Mess-Plattendurchmesser : 50 mm (Platte/Platte)) mit einer Scherrate von 1 s⁻¹ von 9'000 - 100'000 Pas und eine Viskosität gemessen mit einer Scherrate von 100 s⁻¹ von 400 - 15'000 Pas aufweist.

2. Beschichtungssystem nach Anspruch 1, wobei der anorganische Zuschlagstoff **AZ** eine Sieblinie im Bereich von 0.3 bis 2.0 mm, bevorzugt im Bereich 0.3 bis 1.5 mm, insbesondere im Bereich von 0.5 bis 1.2 mm, aufweist.

3. Beschichtungssystem nach Anspruch 1 oder Anspruch 2, wobei der anorganische Zuschlagstoff **AZ** eine Partikelgrösse im Bereich von 0.3 bis 2.0 mm, bevorzugt im Bereich 0.3 bis 1.5 mm, insbesondere im Bereich von 0.5 bis 1.2 mm, aufweist.

4. Beschichtungssystem nach irgendeinem der Ansprüche 1 bis 3, wobei es sich bei den Fasern **FS** um Glas-, Carbon- oder Kunststofffasern, insbesondere Polyethylen- oder Polypropylenfasern, handelt.

5. Beschichtungssystem nach irgendeinem der Ansprüche 1 bis 4, wobei die Harnstoffzubereitung **HZ** eine Lösung eines Harnstoffurethans, vorzugsweise in Gegenwart eines Alkalimetalkations, insbesondere eines Lithiumhalogenidsalzes, in einem aprotischen Lösungsmittel ist.

6. Beschichtungssystem nach Anspruch 5, wobei das Harnstoffurethan aus einem monofunktionellen C4-bis C22-Alkylalkohol oder Cycloalkylalkohol, einem Diisocyanat und einem Diamin aufgebaut ist.

7. Beschichtungssystem nach irgendeinem der Ansprüche 1 bis 6, wobei das Beschichtungssystem eine Viskosität gemessen bei 23°C mittels eines Rheometers mit beheizbarer Platte (Rheotec MRC300) (Spalt 0.5 mm, Mess-Plattendurchmesser : 50 mm (Platte/Platte)) mit einer Scherrate von 1s⁻¹ von 10'000 - 80'000 Pas, 15'000 - 80'000 Pas, 20'000 - 80'000 Pas, besonders bevorzugt 25'000 - 80'000 Pas, und eine Viskosität gemessen bei 23°C mittels eines Rheometers mit beheizbarer Platte (Rheotec MRC300) (Spalt 0.5 mm, Mess-Plattendurchmesser : 50 mm (Platte/Platte)) mit einer Scherrate von 100 s⁻¹ von 400 - 12'000 Pas, 1'000 - 10'000 Pas, 1'000 - 8'000 Pas, 1'000 - 6'500 Pas, besonders bevorzugt 2'000 - 6'500 Pas, aufweist.

8. Beschichtungssystem nach irgendeinem der Ansprüche 1 bis 7, wobei das Reaktionsharz des Reaktionsharzsystems **RH** ausgewählt ist aus der Gruppe bestehend aus Epoxidharzen, Polyurethanen, Polyharnstoffen, Gemischen aus Polyurethanen und Polyharnstoffen, Polymethacrylaten und Polyacrylaten.

9. Beschichtungssystem gemäss Anspruch 8, wobei das Reaktionsharz des Reaktionsharzsystems **RH** ausgewählt ist aus der Gruppe bestehend aus Epoxidharzen und Polyurethanen, insbesondere Polyurethanen.

10. Ausgehärtete Zusammensetzung, erhalten aus einem Beschichtungssystems gemäss einem der Ansprüche 1 bis 9 nach dem Vermischen der Komponenten und deren Aushärtung.

11. Verwendung eines Beschichtungssystems gemäss einem der Ansprüche 1 bis 9 als Beschichtung.

12. Verwendung gemäss Anspruch 11 in einem Bodenbeschichtungssystem, umfassend
- gegebenenfalls einen Primer und/oder eine Grundierung und/oder eine Reparatur- oder Nivelliermasse,
- mindestens eine Schicht des in den Ansprüchen 1 bis 9 beschriebenen Beschichtungssystem,
- gegebenenfalls eine Versiegelung.

13. Verwendung gemäss Anspruch 12 in Industrieböden, Brücken und Parkdecks, besonders bevorzugt Parkdecks.

14. Verfahren zur Herstellung einer Beschichtung mit einem Beschichtungssystem nach irgendeinem der Ansprüche 1 bis 9, wobei das Verfahren folgende Verfahrensschritte umfasst:
a) Mischen von Reaktionsharzsystem **RH,** Thixotropierhilfsmittel **TH** und anorganischen Zuschlagstoffen **AZ** gemäss der Ansprüche 1 bis 9 um ein Beschichtungssystem gemäss einem der Ansprüche 1 bis 9 zu erhalten,
b) Aufbringen des erhaltenen Beschichtungssystems auf einen Untergrund,
c) vorzugsweise Bearbeiten des aufgebrachten Beschichtungssystems und
d) Aushärten des aufgebrachten Beschichtungssystems.

## Claims

1. Coating system comprising:
- at least one reactive resin system **RH;**
- at least one thixotropic assistant **TH** selected from the group consisting of urea preparations **HZ** and fibers **FS;**
- at least one inorganic aggregate **AZ** having a particle size in the range from 0.2 to 3.0 mm;
wherein the coating system 3 min after the mixing of all the components of the coating system apart from the at least one inorganic aggregate **AZ** has a viscosity as measured at 23°C using a rheometer with heatable plate (Rheotec MRC300) (0.5 mm gap, measurement plate diameter: 50 mm (plate/plate)) with a shear rate of 1 s⁻¹ of 9000-100 000 Pas and a viscosity as measured at a shear rate of 100 s⁻¹ of 400-15 000 Pas.

2. Coating system according to Claim 1, wherein the inorganic aggregate **AZ** has a grading curve in the range from 0.3 to 2.0 mm, preferably in the 0.3 to 1.5 mm range, especially in the range from 0.5 to 1.2 mm.

3. Coating system according to Claim 1 or Claim 2, wherein the inorganic aggregate **AZ** has a particle size in the range from 0.3 to 2.0 mm, preferably in the 0.3 to 1.5 mm range, especially in the range from 0.5 to 1.2 mm.

4. Coating system according to any of Claims 1 to 3, wherein the fibers **FS** are glass fibers, carbon fibers or polymeric fibers, especially polyethylene fibers or polypropylene fibers.

5. Coating system according to any of Claims 1 to 4, wherein the urea preparation **HZ** is a solution of a urea urethane, preferably in the presence of an alkali metal cation, especially of a lithium halide salt, in an aprotic solvent.

6. Coating system according to Claim 5, wherein the urea urethane is synthesized from a monofunctional C4 to C22 alkyl alcohol or cycloalkyl alcohol, a diisocyanate, and a diamine.

7. Coating system according to any of Claims 1 to 6, wherein the coating system has a viscosity as measured at 23°C using a rheometer with heatable plate (Rheotec MRC300) (0.5 mm gap, measurement plate diameter: 50 mm (plate/plate)) with a shear rate of 1 s⁻¹ of 10 000-80 000 Pas, 15 000-80 000 Pas, 20 000-80 000 Pas, more preferably 25 000-80 000 Pas, and a viscosity as measured at 23°C using a rheometer with heatable plate (Rheotec MRC300) (0.5 mm gap, measurement plate diameter: 50 mm (plate/plate)) with a shear rate of 100 s⁻¹ of 400-12 000 Pas, 1000-10 000 Pas, 1000-8000 Pas, 1000-6500 Pas, more preferably 2000-6500 Pas.

8. Coating system according to any of Claims 1 to 7, wherein the reactive resin of the reactive resin system **RH** is selected from the group consisting of epoxy resins, polyurethanes, polyureas, mixtures of polyurethanes and polyureas, polymethacrylates, and polyacrylates.

9. Coating system according to Claim 8, wherein the reactive resin of the reactive resin system **RH** is selected from the group consisting of epoxy resins and polyurethanes, especially polyurethanes.

10. Cured composition obtained from a coating system according to any of Claims 1 to 9 after the mixing of the components and their curing.

11. Use of a coating system according to any of Claims 1 to 9 as a coating.

12. Use according to Claim 11 in a floor coating system, comprising
- optionally a primer and/or an undercoat and/or a repair compound or leveling compound,
- at least one layer of the coating system described in Claims 1 to 9,
- optionally a seal.

13. Use according to Claim 12 in industrial floors, bridges, and parking decks, more preferably parking decks.

14. Method for producing a coating with a coating system according to any of Claims 1 to 9, the method comprising the following method steps:
a) mixing reactive resin system **RH,** thixotropic assistant **TH,** and inorganic aggregates **AZ** as in Claims 1 to 9 to give a coating system according to any of Claims 1 to 9,
b) applying the resulting coating system to a substrate,
c) preferably machining the applied coating system, and
d) curing the applied coating system.

## Revendications

1. Système de revêtement comprenant :
- au moins un système de résine de réaction **RH** ;
- au moins un auxiliaire de thixotropie **TH** choisi dans le groupe constitué par des préparations d'urée **HZ** et des fibres **FS** ;
- au moins un agrégat inorganique **AZ** doté d'une taille de particule dans la plage de 0,2 à 3,0 millimètres ;
le système de revêtement présentant, 3 min après le mélange de tous les composants du système de revêtement, à l'exception de l'au moins un agrégat inorganique **AZ,** une viscosité, mesurée à 23 °C au moyen d'un rhéomètre doté d'une plaque chauffable (Rheotec MRC300) (fente 0,5 mm, diamètre de plaque de mesure : 50 mm (plaque/plaque)) avec une vitesse de cisaillement de 1 s⁻¹, de 9 000 à 100 000 Pas et une viscosité, mesurée avec une vitesse de cisaillement de 100 s⁻¹, de 400 à 15 000 Pas.

2. Système de revêtement selon la revendication 1, l'agrégat inorganique **AZ** présentant une courbe de granulométrique dans la plage de 0,3 à 2,0 mm, préférablement dans la plage de 0,3 à 1,5 mm, en particulier dans la plage de 0,5 à 1,2 mm.

3. Système de revêtement selon la revendication 1 ou la revendication 2, l'agrégat inorganique **AZ** présentant une taille de particule dans la plage de 0,3 à 2,0 mm, préférablement dans la plage de 0,3 à 1,5 mm, en particulier dans la plage de 0,5 à 1,2 mm.

4. Système de revêtement selon l'une quelconque des revendications 1 à 3, les fibres **FS** étant des fibres de verre, de carbone ou de plastique, en particulier des fibres de polyéthylène ou de polypropylène.

5. Système de revêtement selon l'une quelconque des revendications 1 à 4, la préparation d'urée **HZ** étant une solution d'un urée-uréthane, de préférence en présence d'un cation de métal alcalin, en particulier d'un sel d'halogénure de lithium, dans un solvant aprotique.

6. Système de revêtement selon la revendication 5, l'urée-uréthane étant construit à partir d'un alkylalcool ou cycloalkylalcool monofonctionnel, en C4 à C22, d'un diisocyanate et d'une diamine.

7. Système de revêtement selon l'une quelconque des revendications 1 à 6, le système de revêtement présentant une viscosité, mesurée à 23 °C au moyen d'un rhéomètre doté d'une plaque chauffable (Rheotec MRC300)(fente 0,5 mm, diamètre de plaque de mesure : 50 mm (plaque/plaque)) avec une vitesse de cisaillement de 1 s⁻¹, de 10 000 à 80 000 Pas, 15 000 à 80 000 Pas, 20 000 à 80 000 Pas, particulièrement préférablement de 25 000 à 80 000 Pas, et une viscosité, mesurée à 23 °C au moyen d'un rhéomètre doté d'une plaque chauffable (Rheotec MRC300) (fente 0,5 mm, diamètre de plaque de mesure : 50 mm (plaque/plaque)) avec une vitesse de cisaillement de 100 s⁻¹, de 400 à 12 000 Pas, 1 000 à 10 000 Pas, 1 000 à 8 000 Pas, 1 000 à 6 500 Pas, particulièrement préférablement 2 000 à 6 500 Pas.

8. Système de revêtement selon l'une quelconque des revendications 1 à 7, la résine de réaction du système de résine de réaction **RH** étant choisie dans le groupe constitué par des résines époxy, des polyuréthanes, des polyurées, des mélanges de polyuréthanes et de polyurées, des polyméthacrylates et des polyacrylates.

9. Système de revêtement selon la revendication 8, la résine de réaction du système de résine de réaction **RH** étant choisie dans le groupe constitué par des résines époxy et des polyuréthanes, en particulier des polyuréthanes.

10. Composition durcie, obtenue à partir d'un système de revêtement selon l'une quelconque des revendications 1 à 9 après le mélange des composants et leur durcissement.

11. Utilisation d'un système de revêtement selon l'une quelconque des revendications 1 à 9 en tant que revêtement.

12. Utilisation selon la revendication 11 dans un système de revêtement de sol comprenant
- éventuellement un apprêt et/ou une couche primaire et/ou une masse de réparation ou de nivellement,
- au moins une couche du système de revêtement décrit dans les revendications 1 à 9,
- éventuellement un scellement.

13. Utilisation selon la revendication 12 dans des sols industriels, des ponts et des parkings, particulièrement préférablement des parkings.

14. Procédé pour la préparation d'un revêtement avec un système de revêtement selon l'une quelconque des revendications 1 à 9, le procédé comprenant les étapes de procédé suivantes :
a) mélange du système de résine de réaction **RH,** de l'auxiliaire de thixotropie **TH** et des agrégats inorganiques **AZ** selon les revendications 1 à 9 pour obtenir un système de revêtement selon l'une quelconque des revendications 1 à 9,
b) application du système de revêtement obtenu sur un sol,
c) de préférence traitement du système de revêtement appliqué et
d) durcissement du système de revêtement appliqué.
